# EUROPÄISCHE PATENTANMELDUNG

(11) **EP 1 479 294 A2**
(43) Veröffentlichungstag der Anmeldung: **24.11.2004**
(21) Anmeldenummer: 04011948.9
(22) Anmeldetag: 19.05.2004
(51) Int. Cl.: A01M 29/00

(54) **Vogelschutzvorrichtung für einen transparenten Stoff, Glas mit einer Vogelschutzvorrichtung und Herstellungsverfahren hierfür**

(30) Priorität: 19.05.2003 DE 10322500
(71) Anmelder: Meyerhuber, Alfred, Dr., 91749 Wittelshofen (DE); GLASWERKE ARNOLD GmbH & Co. KG, 73630 Remshalden (DE)
(72) Erfinder: Arnold, Hans-Joachim, 73630 Remshalden (DE); Sader, Michael, 91710 Gunzenhausen (DE); Meyerhuber, Peter, 91710 Gunzenhausen (DE); Meyerhuber, Alfred, Dr., 91749 Wittelshofen (DE)
(74) Vertreter: Beetz & Partner Patentanwälte

(57) **Zusammenfassung**

Eine transparente Scheibe 20 hat eine Vogelschutzvorrichtung in Form einer optisch wirksamen Struktur 21 - 26, die dann, wenn sie beim oder im transparenten Stoff vorhanden ist, aufgrund eines höheren Auflösungsvermögens der Sichtigkeit mindestens einer Vogelart für diese Vogelart optisch besser erkennbar ist als für einen Menschen. Die Vorrichtung wird durch Einbrennen mittels Laserstrahl oder durch Laserbearbeitung erzeugt. Ein anderer Aspekt der Erfindung nützt zusätzlich oder stattdessen in weiter bestimmter Ausgestaltung die Tatsache, daß viele Vögel einen anderen und insbesondere weiteren Wellenlängenbereich besitzen, den sie wahrnehmen können.

## Beschreibung

Die Erfindung betrifft eine Vogelschutzvorrichtung, einen transparenten Stoff mit einer Vogelschutzvorrichtung und ein Herstellungsverfahren hierfür gemäß den Oberbegriffen der unabhängigen Ansprüche.

Es ist Vögeln kaum möglich, durchsichtige Hindernisse zu erkennen und diesen auszuweichen, da diese Hindernisse ein Nebenprodukt der Erfindungen der Neuzeit sind und Vögel sich diesen geänderten Umständen noch nicht angepasst haben. Durch dieses Nichterkennen der Hindernisse kommt es häufig zum Vogelschlag bzw. Vogeltod und/oder zu zerbrochenen Glasscheiben.

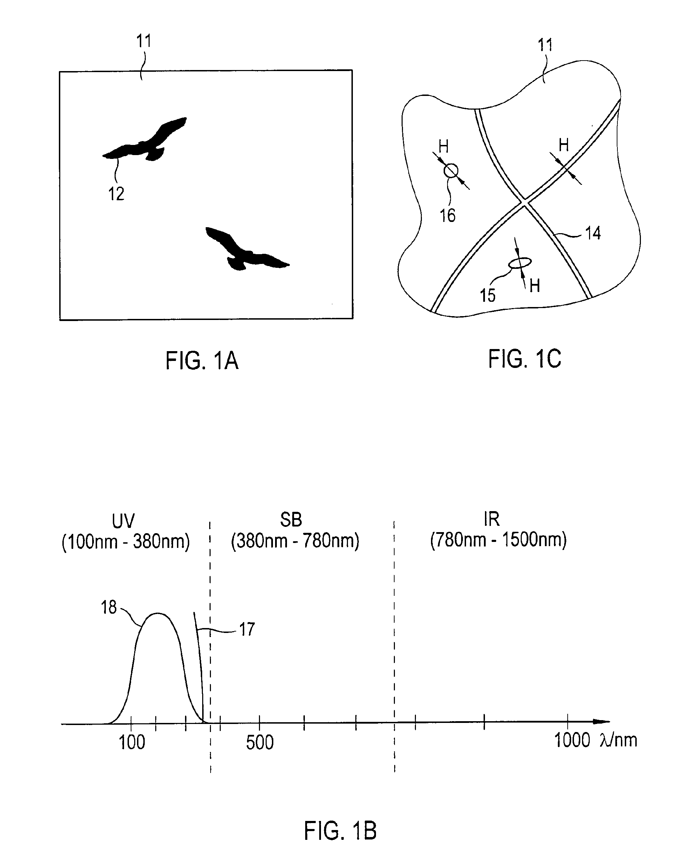

Eine Abhilfe kann hier dadurch geschaffen werden, verglaste Flächen mit optisch wahrnehmbaren Strukturen zu versehen, was oft in der Form von Raubvogelsilhouetten geschieht, um nicht nur ein erkennbares Hindernis sondern auch noch eine Gefahr darzustellen. Fig.1A stellt dies schematisch dar. Auf einer transparenten Fläche 11 ist eine Silhouette 12 aufgeklebt. Dabei handelt es sich in der Regel um schwarze und damit undurchsichtige Folien, die von Vögeln und Menschen wahrgenommen werden. Ein Nachteil dieses Lösungsansatzes besteht darin, dass die Lichtdurchlässigkeit als wesentliche Funktion von Glasflächen sowie die Ästhetik beeinträchtigt sind.

Eine andere Vogelschutzvorrichtung ist aus DE 199 61 506 A1 bekannt. Dort wird auf dem Glas ein transparenter Stoff aufgebracht, der wegen der UV-Sichtigkeit von Vögeln für Vögel besser sichtbar ist als für Menschen. Fig. 1B zeigt das Absorptions- oder Reflexionsspektrum einer solchen bekannten Vogelschutzvorrichtung. Sie absorbiert bzw. reflektiert Licht im für Menschen nicht sichtbaren Bereich.

Fig. 1C schließlich zeigt schematisch eine aus der früheren Anmeldung DE 101 61 336.9 bekannte Glasscheibe 11, auf die eine linienartige Struktur 14, eine elliptische Struktur 15 und als Sonderfall der elliptischen Struktur eine kreisförmige Struktur 16 aufgebracht wurden. Die mit H bezeichnete Hauptabmessung definiert dabei den kleinsten Abstand zweier Ränder einer Struktur zueinander, also beispielsweise die Linienbreite oder den kleinsten Durchmesser einer Ellipse oder den Durchmesser eines Kreises. Sie kann kleiner als 1mm oder als ein noch kleinerer Grenzwert sein.

Ferner ist ein Sicherheitsglas bekannt, in das feine elektrisch verbundene Metalldrähte eingearbeitet sind. Dies dient aber der Bruchdetektion anhand der Auswertung der elektrischen Werte (Widerstand) der eingearbeiteten Drähte.

Aufgabe der Erfindung ist es, eine Vogelschutzvorrichtung für einen transparenten Stoff bzw. eine transparente Scheibe anzugeben, die die Lichtdurchlässigkeit des transparenten Stoffes im für Menschen sichtbaren Bereich weniger beeinflusst und dadurch ästhetisch neutraler ist. Sie soll außerdem einfach herstellbar sein.

Diese Aufgabe wird mit den Merkmalen der unabhängigen Ansprüche gelöst. Abhängige Ansprüche sind auf bevorzugte Ausführungsformen der Erfindung gerichtet.

Die erfindungsgemäße transparente Scheibe hat eine Vogelschutzvorrichtung in Form einer optisch wirksamen Struktur, die dann, wenn sie beim oder im transparenten Stoff vorhanden ist, aufgrund eines höheren Auflösungsvermögens der Sichtigkeit mindestens einer Vogelart für diese Vogelart optisch besser erkennbar ist als für einen Menschen. Die Vorrichtung wird durch Einbrennen mittels Laserstrahl oder durch Laserbearbeitung auf einer transparenten Scheibe aufgebracht.

Die Vogelschutzvorrichtung kann beim oder im transparenten Stoff eine optisch wirksame Struktur sein oder aufweisen, deren eine Hauptabmessung kleiner 2 mm, vorzugsweise kleiner 1 mm, vorzugsweise kleiner 0, 5 mm, weiter vorzugsweise kleiner 0,1 mm, weiter vorzugsweise kleiner 0,05 mm ist.

Bei linienartigen Strukturen ist die Breite der Linie und bei elliptischen Strukturen der kleinsten Durchmesser die oben genannte Hauptabmessung. Diese definiert allgemein den kleinsten Abstand zweier Ränder einer Struktur zueinander, also beispielsweise die Linienbreite oder den kleinsten Durchmesser einer Ellipse oder den Durchmesser eines Kreises. Bei unregelmäßigen, fleckenartigen Strukturen kann der Durchmesser eines lächengleichen Kreises die Hauptabmessung sein. Bei verteilten Werten kann ggf. deren Mittelwert die Hauptabmessung sein.

Die optisch wirksame Struktur kann einen anderen Brechungsindex und/oder eine andere Lichtdurchlässigkeit und/oder ein anderes Streuverhalten als der transparente Stoff aufweisen.

Die optisch wirksame Struktur kann ein regelmäßiges und/oder zufallsgeneriertes und/oder unregelmäßiges und/oder amorphes Muster sein oder aufweisen. Ferner kann sie Glas und/ oder Kunststoff und/ oder Metall, das elektrisch nicht angeschlossen ist, sein oder aufweisen.

Die erweiterte Wellenlängensichtigkeit von Vögeln kann erfindungsgemäß durch eine oder mehrere der folgenden Maßnahmen ausgenützt werden:
(1) Es wird in den flächig ausgebildeten transparenten Stoff Licht im entsprechenden Wellenlängenbereich, insbesondere UV-Licht (Wellenlänge < 500 nm, vorzugsweise < 450 nm, weiter vorzugsweise <400 nm), aktiv von entsprechenden Quellen eingestrahlt, das dann wieder von Streu- oder Reflexions- oder Absorptionszentren im oder am transpartenten Stoff so manipuliert wird, daß der transparente Stoff als UV-leuchtend erscheint und somit als Hindernis erkennbar wird. Das Licht kann beispielsweise vom Rand einer (Glas-)Scheibe in diese eingestrahlt und dann von dieser wieder aus der Fläche abgestrahlt werden. Die Lichtquelle(n) kann bzw. können am Rand der Scheibe und/oder im Rahmen der Scheibe angebracht sein.
(2) Bei Doppelscheiben, die zwischen sich ein Fluid, insbesondere ein Gas vorzugsweise gasdicht einschließen, kann die Manipulation des UV-Lichts (Absorption, Reflexion) auch durch Befüllung des Zwischenraums zwischen den Doppelscheiben mit einem Fluid, insbesondere Gas mit entsprechenden Absorptions- bzw. Reflexionseigenschaften erfolgen.
(3) Weiterhin kann das gewünschte wellenlängenselektive Absorptions- bzw. Reflexionsberhalten durch Aufdampfen bestimmter Stoffe auf eine Scheibe erzeugt werden, dies ggf. auch wieder bestimmten Mustern folgend. Die Stoffe können ein oder mehrere Oxide insbesondere von Metallen aufweisen.
(4) Schlielich kann das gewünschte wellenlängenselektive Absorptions- bzw. Reflexionsberhalten durch nicht dauerhaften Auftrag bestimmter Stoffe auf eine Scheibe erzeugt werden, bspw. indem geeignete gelöste Stoffe auf eine Scheibe aufgesprüht werden und das Lösungsmittel dann verdunstet.

UV-Manipulation, insbes. Absorption bzw. Reflexion bzw. Bestrahlung erfolgt insbesondere im UV-Bereich (Wellenlänge < 500 nm, vorzugsweise < 450 nm, weiter vorzugsweise < 400 nm) an einer oder mehreren einzelnen Wellenlängen 17 oder Wellenlängenbereichen 18. Im sichtbaren Bereich (Wellenlänge > 500 nm, vorzugsweise > 450 nm, weiter vorzugsweise > 400 nm, und Wellenlänge < 800 nm) dagegen erfolgt keine oder kaum Reflexion bzw. Absorption, insbesondere in der Weise, dass die Intensitätsminderung im genannten Bereich unter 20%, vorzugsweise unter 8%, weiter vorzugsweise unter 3 % liegt.

Der mit der Vogelschutzvorrichtung versehene transparente Stoff kann Glas oder Kunststoff sein. Dieser transparente Stoff ist entweder als Flachglas ausgebildet, wobei die Vogelschutzvorrichtung auf mindestens einer Oberfläche des Flachglases ausgebildet oder angebracht sein kann, oder als mehrlagige Glasscheibe, wo die Vogelschutzvorrichtung dann zwischen mindestens zwei Lagen vorgesehen sein kann.

Es sind auch Kombinationen der verschiedenen Merkmale der Vogelschutzeinrichtung hinsichtlich der Ausführung und/oder Anbringung möglich.

Bezugnehmend auf die Zeichnungen werden nachfolgend einzelne Ausführungsformen der Erfindung beschrieben, es zeigen:
- Fig. 1: bekannte Vogelschutzvorrichtungen,
- Fig. 2: eine Ausführungsform einer feinen Struktur,
- Fig. 3: eine Ausführungsform mit UV-Bestrahlung
- Fig. 4: eine Ausführungsform mit Befüllung eines Volumens,
- Fig. 5: eine Ausführungsform mit Beschichtung.

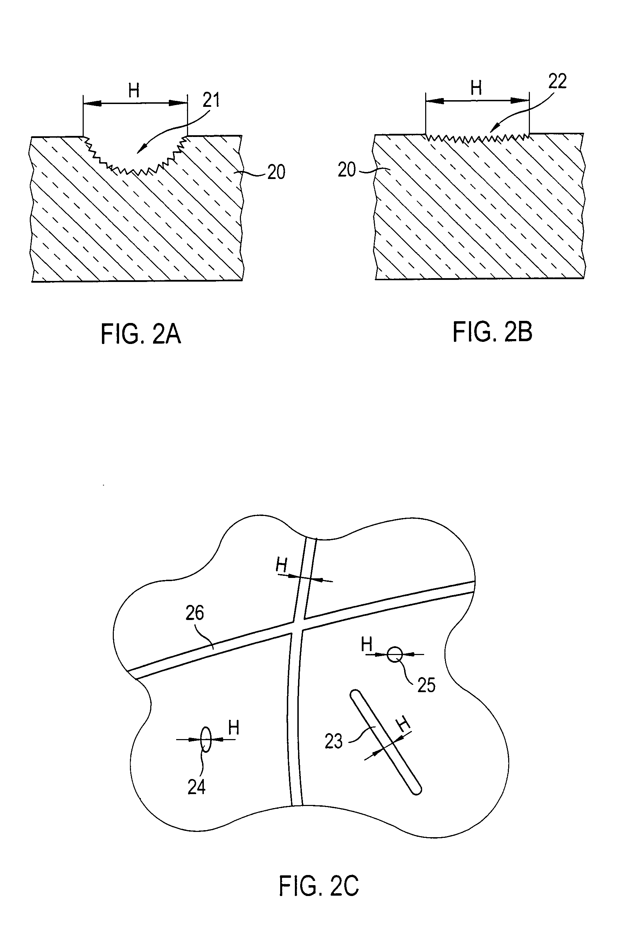

Ein Aspekt der Erfindung nutzt die Tatsache, dass viele Vögel ein höheres Auflösungsvermögen der Sichtigkeit haben und dadurch bei gegebenem Abstand feine Strukturen optisch wahrnehmen können, die ein Menschen kaum oder nicht mehr optisch wahrnehmen kann. Dies ist in Fig. 2 schematisch gezeigt.

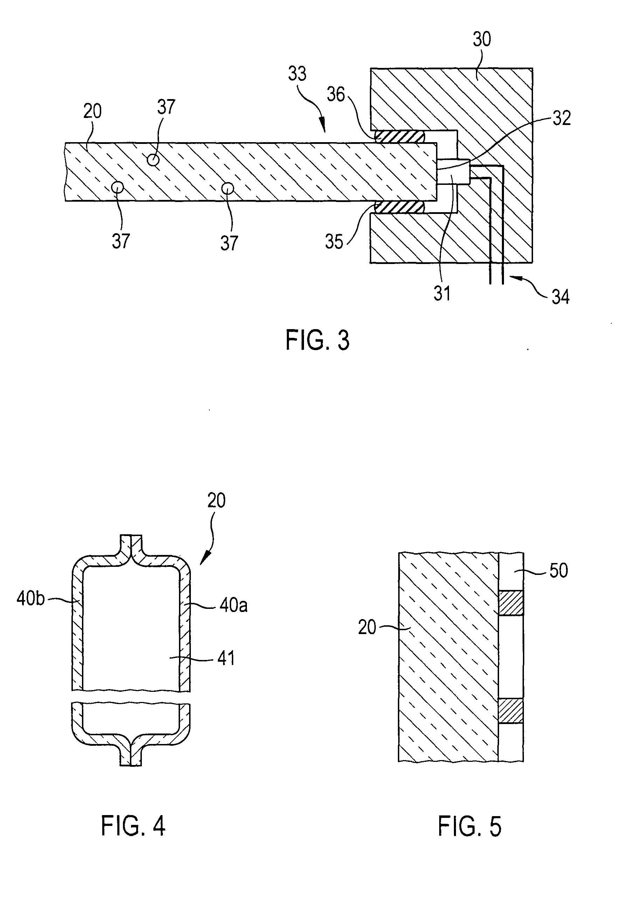

Ein anderer, in den Figuren 3 bis 5 gezeigter Aspekt der Erfindung nützt zusätzlich oder stattdessen in weiter unten beschriebener Ausgestaltung die Tatsache, daß viele Vögel einen anderen und insbesondere weiteren Wellenlängenbereich besitzen, den sie wahrnehmen können. Dieser Wellenlängenbereich ist für einen Menschen kaum oder nicht mehr optisch wahrnehmbar. Eine Glasscheibe, die dementsprechend präpariert ist, wird damit für Vögel anders als durchsichtig erscheinen und damit als Hindernis erkennbar sein.

Die Fig. 2 zeigt verschiedene Ausführungsformen der Struktur der Vogelschutzvorrichtung.

Fig. 2A zeigt schematisch eine Glasscheibe 20 im Schnitt, in die mittels Laserbearbeitung ein Gesenk als optisch wirksame Struktur 21 eingebracht wurde. Es ist längs seiner Hauptabmessung H geschnitten dargestellt. Bei einer linienartigen Struktur kann dies deren Breite sein. Das Gesenk kann bspw. wegen seines rauhen Bodens als matt gegenüber dem umgebenden transparenten Stoff (Glas, Plastik) erscheinen, so dass es von Vögeln wahrgenommen werden kann.

Fig. 2B zeigt eine Abwandlung zur Ausführungsform der Fig. 2A dahingehend, daß kein Gesenk in die (Glas-) Scheibe eingearbeitet wurde, sondern lediglich die Oberfläche aufgerauht wurde und der aufgerauhte Bereich matt wirkt, so daß auch auf diese Weise eine feine Linie mit Hauptabmessung H erzeugt werden kann.

Anstelle der Bearbeitung mittels Laserstrahls kann auch die Bearbeitung mit einem feinen Sandstrahl erfolgen, der optisch wirksame Strukturen wie oben beschrieben erzeugt.

Fig. 2C zeigt die erzeugten Strukturen in Draufsicht. Es können kurze Linien 23 oder durchgehende Striche 26 sein oder punkt- oder ellipsenförmige Muster 24, 25. Deren wie oben definierte Hauptabmessung kann den oben genannten Bedingungen genügen.

Die Strukturen können in eine Scheibe bspw. nach deren Herstellung eingearbeitet werden, indem ein Laserstrahl geeignet (Bahn, Intensität, Geschwindigkeit) über die Fläche der Scheibe geführt wird, bspw. über eine Umlenkoptik mit Spiegeln oder durch Bewegung der Laserquelle selbst, um die Struktur(en) einzuarbeiten. Dies ist auch nach dem Einbau von Scheiben möglich, so dass auch schon verbaute Scheiben mit dieser Verfahrensweise "nachgerüstet" werden können.

Die Fig. 3 zeigt eine Ausführungsform der Vogelschutzvorrichtung, die die bessere Wellelängensichtigkeit von Vögeln ausnützt. Sie zeigt den Schnitt durch eine (Glas)-Scheibe 20, die in einem schematisch angedeuteten Rahmen 30 mit Dichtmitteln 35, 36 gehalten sein kann. Es ist eine Beleuchtungseinrichtung 31 vorgesehen, die die Scheibe 20 mit einem bestimmten Licht beleuchtet. Die Wellenlänge des Lichts hat ihr Intensitätsmaximum vorzugsweise bei unter 500 nm, vorzugsweise unter 450 nm, weiter vorzugsweise unter 400 nm. Es handelt sich überwiegend oder ausschließlich um UV-Licht. Bei der Beleuchtungseinrichtung kann es sich um UV-Lampen und/oder um UV-Leuchtdioden handeln. Dementsprechend sind elektrische Anschlüsse 34 etc. vorhanden.

Durch die Beleuchtung einer Scheibe 20 eines transparenten Stoffes mit Licht einer Wellenlänge wie oben beschrieben bzw. von unter 500 nm ergibt sich somit ein Verfahren zur Vermeidung von Vogelschlag an transparenten Scheiben. Die Quelle des Lichts kann so angeordnet sein, daß das Licht nur im Randbereich 33 (insbes. Abstand zur Kante < 10% der Abmessung bis zur gegenüberliegenden Kante) der Scheibe 20 oder in keinem Bereich der Scheibe senkrecht auf die Scheibe fällt bzw. daß das Licht überwiegend schräg eingestrahlt wird.

Das Licht kann auch - wie gezeigt - von der Kante 32 der Scheibe in die Scheibe eingestrahlt werden. Die Scheibe kann vorher, bspw. schon bei ihrer Herstellung, mit Streuzentren 37 versehen worden sein, die insbesondere bzw. überwiegend und vorzugsweise ausschließlich das eingestrahlte Licht streuen. Insoweit ist also auch eine transparente Scheibe 20 mit einer am Rand der Scheibe angeordneten Beleuchtungseinrichtung 31 zur Beleuchtung der Scheibe mit Licht wie oben beschrieben Teil der Erfindung. Gleiches gilt für eine Scheibe 20 mit UV-wirksamen Streuzentren 37 und für ein Fenster oder eine Tür mit einer transparenten Scheibe 20 und einem Rahmen 30, der die Scheibe ganz oder bereichsweise umgibt, und einer vorzugsweise am oder im Rahmen 30 angeordnete, oben beschriebenen Beleuchtungseinrichtung 31. Auch ein Rahmen alleine für eine transparente Scheibe mit einer oben beschriebenen Beleuchtungseinrichtung 31 ist Teil der Erfindung.

Fig. 4 zeigt im Schnitt eine Doppelscheibe 20 (z. B. Isolierglas) mit zwei Scheiben 40a, 40b und einem Raum 41 zwischen ihnen, der gasdicht abgeschlossen sein kann. In ihm befindet sich ein Fluid, vorzugsweise ein Gas, das Licht bestimmter Wellenlängen absorbiert und/oder reflektiert. Die Reflexions- bzw. Absorptionskurve des Fluids hat ihr Maximum vorzugsweise bei unter 500 nm, vorzugsweise unter 450 nm, weiter vorzugsweise unter 400 nm, insbesonder im UV-Bereich. Das Fluid kann auch Flüssigkeitströpfchen aufweisen, die die genannten Eigenschaften haben. Die Tröpfchen können natürlich entstehen oder durch eine geeignete Einrichtung erzeugt werden, bspw. einer Ultraschalleinrichtung, bspw. piezoelektrisch.

Die Scheibe 20 eines transparenten Stoffes, kann auch ganz oder bereichsweise, wie in Fig. 5 schematisch gezeigt, mit einem Metalloxid 50 beschichtet sein, das Wellenlängen und/ oder Wellenlängenbereiche wie oben genannt absorbiert und/oder reflektiert und/oder streut und andere Wellenlängenbereiche im wesentlichen unbeeinflußt läßt. Der Auftrag kann bestimmten Mustern folgend oder flächig sein. Er kann auf einer der beiden Oberflächen einer Scheibe oder auf beiden vorgesehen sein. Bei Doppelscheiben kann er auf der Innenseite einer oder beider Scheiben vorgesehen sein.

Anstelle einer fest aufgebrachten Reflexions- bzw. Absorptionsschicht kann die Vermeidung von Vogelschlag an transparenten Scheiben 20 auch dadurch erfolgen, daß auf die Scheibe wiederholt ein nicht dauerhaft haltender Stoff aufgetragen wird, der Wellenlängen wie oben genannt absorbiert und/oder reflektiert und/oder streut. Der Stoff kann mit dem Lösungsmittel aufgetragen werden, das nach dem Auftrag verdunstet. Er kann in einem Fensterputzmittel oder separat hiervon vorgesehen sein, im letzteren Falle aber bspw. als Gebinde mit einem herkömmlichen Putzmittel vorgesehen sein und verkauft werden.

Allgemein liegt der für Menschen sichtbare Bereich von Licht etwa zwischen 400 und 800 nm. Darüber liegt der Infrarotbereich (IR), darunter der ultraviolette Bereich (UV). Die oben beschriebenen Wellenlängenselektivitäten bei Absorption, Reflexion, Emission oder Streuung können eine Linie oder ein Maximum eines Bereichs insbesondere im Wellenlängenbereich zwischen 50 und 450 nm haben. Solche Charakteristika sprechen die UV-Sichtigkeit von Vögeln an, so dass die so behandelte (Glas-) Scheibe für Vögel UV-dunkler oder UV-heller erscheint und damit sichtbar wird. Vorzugsweise liegt die Absorptionslinie und/oder das Maximum im Wellenlängenbereich zwischen 420 und 200 nm, weiter vorzugsweise zwischen 420 und 360 nm. Es können auch mehrere Absorptionslinien oder Absorptionsmaxima wie oben angegeben vorgesehen sein, wobei diese dann auf unterschiedlichen Wellenlängen in den oben genannten Bereichen liegen können. Soweit sinnvoll, können Absorptionslinien oder Absorptionsmaxima auch im Infrarotbereich liegen, dort z.B. im Wellenlängenbereich zwischen 750 und 3000 nm, vorzugsweise zwischen 780 und 1500 nm.

Die Vogelschutzvorrichtung kann flächig oder einem bestimmten Muster folgend auf dem transparenten Stoff aufgebracht sein. Sofern ein Muster vorgesehen ist, kann es abermals die Silhouette eines Raubvogels sein. Es kann sich auch um andere Muster handeln, beispielsweise um Streifen, Gitter, Punkte oder ähnliches. Bei solchen Ausführungsformen wären dann diese Muster für zumindest eine Vogelart optisch besser wahrnehmbar als für einen Menschen. Insbesondere wären sie für Menschen nicht oder kaum wahrnehmbar.

Sofern von der Wahrnehmbarkeit durch Vögel oder Menschen gesprochen wird, kann auf Durchschnittswerte abgehoben werden. Sofern eine Vogelschutzvorrichtung als optisch nicht wahrnehmbar beschrieben ist, kann damit eine Intensitätsminderung im für Menschen sichtbaren Bereich von weniger als 5%, vorzugsweise weniger als 1% gemeint sein. Sofern von einer kaum wahrnehmbaren Vogelschutzvorrichtung die Rede ist, kann damit eine Intensitätsminderung im sichtbaren Bereich von weniger als 20%, vorzugsweise weniger als 10% gemeint sein. Der sichtbare Bereich kann hier als von 400 nm bis 800 nm reichend angesehen werden.

Vorzugsweise werden bei der Betrachtung von Absorptions- und Reflexionsvermögen Relativwerte (z.B. %, dB) herangezogen.

In einer bevorzugten Ausführungsform der Erfindung kann die Vorrichtung mehrere parallel zueinander verlaufende optisch wirksame Strukturen mit einem Abstand zueinander von kleiner 10 cm, vorzugsweise kleiner 3 cm, vorzugsweise kleiner 1 cm, weiter vorzugsweise kleiner 1 mm, weiter vorzugsweise kleiner 0,5 mm aufweisen.

In einer anderen Ausführungsform können sich erste parallel zueinander verlaufende optisch wirksame Strukturen, mit den oben genannten Abstand, mit zweiten parallel zueinander verlaufenden optischen Strukturen, mit oben genannten Abstand, vorzugsweise in einem rechten Winkel kreuzen. Die Hauptabmessung der optisch wirksamen Struktur kann dabei wie oben erwähnt sein.

## Patentansprüche

1. Transparente Scheibe (20) mit einer optisch wirksamen Struktur bzw. einer Vogelschutzvorrichtung, **dadurch gekennzeichnet, dass** die optisch wirksame Struktur bzw. die Vogelschutzvorrichtung eine optisch wirksame Struktur (21 - 26) ist oder aufweist, die aufgrund eines höheren Auflösungsvermögens der Sichtigkeit mindestens einer Vogelart für diese Vogelart optisch besser erkennbar ist als für einen Menschen und die mit einem Laserstrahl in die Scheibe eingebrannt oder eingearbeitet wurde.

2. Transparente Scheibe (20) mit einer optisch wirksamen Struktur bzw. einer Vogelschutzvorrichtung, vorzugsweise nach Anspruch 1, **dadurch gekennzeichnet, dass** die optisch wirksamen Struktur bzw. die Vogelschutzvorrichtung eine optisch wirksame Struktur (21 - 26) ist oder aufweist, die so fein ausgebildet ist, dass sie nicht oder kaum für einen Menschen optisch wahrnehmbar ist und mit einem Laserstrahl in die Scheibe eingebrannt oder eingearbeitet wurde.

3. Transparente Scheibe mit einer optisch wirksamen Struktur bzw. einer Vogelschutzvorrichtung, vorzugsweise nach Anspruch 1 oder 2, **dadurch gekennzeichnet, dass** die Vogelschutzvorrichtung bzw. die optisch wirksame Struktur eine optisch wirksame Struktur (21 - 26) ist oder aufweist, deren eine Hauptabmessung kleiner 2 mm, vorzugsweise kleiner 1 mm, vorzugsweise kleiner 0,5 mm, weiter vorzugsweise kleiner 0,1 mm, weiter vorzugsweise kleiner 0,05 mm ist und die mit einem Laserstrahl in die Scheibe eingebrannt wurde.

4. Scheibe (20) nach einem oder mehreren der vorherigen Ansprüche, **dadurch gekennzeichnet, dass** die optisch wirksame Struktur (21 - 26) in der Ebene der Scheibe ein regelmäßiges und/oder zufallsgeneriertes und/oder unregelmäßiges und/ oder amorphes Muster ist oder aufweist.

5. Scheibe (20) nach einem oder mehreren der vorherigen Ansprüche, **dadurch gekennzeichnet, daß** die optisch wirksame Struktur eine Vertiefung (21) ist oder eine aufgeraute Oberfläche (22) hat.

6. Verfahren zur Vermeidung von Vogelschlag an transparenten Scheiben, **dadurch gekennzeichnet, daß** eine Scheibe eines transparenten Stoffes mit Licht einer Wellenlänge von unter 500 nm, vorzugsweise unter 450 nm, weiter vorzugsweise unter 400 nm beleuchtet wird.

7. Verfahren nach Anspruch 5, **dadurch gekennzeichnet, daß** die Quelle des Lichts so angeordnet ist, daß das Licht nur im Randbereich der Scheibe oder in keinem Bereich der Scheibe senkrecht auf die Scheibe fällt.

8. Verfahren nach Anspruch 6 oder 7, **dadurch gekennzeichnet, daß** das Licht von der Kante der Scheibe in die Scheibe eingestrahlt wird.

9. Verfahren nach einem oder mehreren der Ansprüche 6 bis 8, **dadurch gekennzeichnet, daß** die Scheibe mit Streuzentren für Licht einer Wellenlänge von unter 500 nm versehen wurde.

10. Transparente Scheibe (20), **gekennzeichnet durch** eine am Rand der Scheibe angeordnete Beleuchtungseinrichtung (31) zur Beleuchtung der Scheibe mit Licht einer Wellenlänge von unter 500 nm und/ oder **durch** Streu- oder Reflexionszentren (37) für Licht einer Wellenlänge von unter 500 nm.

11. Fenster oder Tür mit einer transparenten Scheibe (20) und einem Rahmen (30), der die Scheibe ganz oder bereichsweise umgibt, **gekennzeichnet durch** eine vorzugsweise am oder im Rahmen (30) angeordnete Beleuchtungseinrichtung (31) zur Beleuchtung der Scheibe mit Licht einer Wellenlänge von unter 500 nm.

12. Vorrichtung nach Anspruch 10 oder 11, **dadurch gekennzeichnet, daß** die Beleuchtungseinrichtung (31) zum Einstrahlen von Licht in die Kante (32) der Scheibe (20) ausgelegt bzw. angeordnet ist.

13. Rahmen für eine transparente Scheibe, **gekennzeichnet durch** eine Beleuchtungseinrichtung (31) zum Einstrahlen von Licht einer Wellenlänge von unter 500 nm in den Randbereich (33) oder die Kante (32) einer vom Rahmen aufzunehmenden transparenten Scheibe (20).

14. Doppelscheibe (40) mit zwei transparenten Scheiben (40a, 40b), die zwischen sich ein Fluid (41), insbesondere ein Gas einschließen, **dadurch gekennzeichnet, daß** das Fluid oder ein darin gelöster oder schwebender Stoff Wellenlängen und/oder Wellenlängenbereiche unter 500 nm Wellenlänge absorbiert und/oder reflektiert und/oder streut.

15. Scheibe (20) eines transparenten Stoffes, **dadurch gekennzeichnet, daß** sie ganz oder bereichsweise mit einem Metalloxid (50) beschichtet ist, das Wellenlängen und/oder Wellenlängenbereiche unter 500 nm Wellenlänge absorbiert und/ oder reflektiert und/ oder streut.

16. Verfahren zur Vermeidung von Vogelschlag an transparenten Scheiben, **dadurch gekennzeichnet, daß** auf die Scheibe wiederholt ein Stoff aufgetragen wird, der Wellenlängen und/oder Wellenlängenbereiche unter 500 nm Wellenlänge absorbiert und/oder reflektiert und/oder streut.

17. Verfahren nach Anspruch 16, **dadurch gekennzeichnet, daß** der Stoff in einem Lösungsmittel gelöst ist, der Stoff mit dem Lösungsmittel aufgetragen wird und das Lösungsmittel nach dem Auftrag verdunstet.
